Europäisches Patentamt

European Patent Office

Office européen des brevets

(19)

(11) Numéro de publication : **0 013 214**

**B1**

(12) **FASCICULE DE BREVET EUROPÉEN**

(45) Date de publication du fascicule du brevet :
**11.11.81**

(51) Int. Cl.³ : **F 24 J   3/02**

(21) Numéro de dépôt : **79401012.4**

(22) Date de dépôt : **13.12.79**

(54) **Elément absorbant l'énergie solaire, capteur solaire équipé d'un tel élément, et panneau solaire comportant de tels capteurs.**

(30) Priorité : **28.12.78 FR 7836676**
**09.11.79 FR 7927714**

(43) Date de publication de la demande :
**09.07.80 (Bulletin 80/14)**

(45) Mention de la délivrance du brevet :
**11.11.81 Bulletin 81/45**

(84) Etats contractants désignés :
**DE FR GB IT NL**

(56) Documents cités :
**FR - A - 2 280 036**
**FR - A - 2 349 806**

(73) Titulaire : **COMPAGNIE DES LAMPES**
**29, rue de Lisbonne**
**F-75008 Paris (FR)**

(72) Inventeur : **Villain, Jacques**
**"THOMSON-CSF" - SCPI 173, bld Haussmann**
**F-75360 Paris Cedex 08 (FR)**

(74) Mandataire : **Dubreuil, Annie et al**
**"THOMSON-CSF" - SCPI 173, bld Haussmann**
**F-75360 Paris Cedex 08 (FR)**

Imprimerie Jouve, 17, rue du Louvre, 75001 Paris, France

Elément absorbant l'énergie solaire, capteur solaire équipé d'un tel élément, et panneau solaire comportant de tels capteurs

La présente invention concerne un élément absorbant l'énergie solaire. Elle concerne également les capteurs solaires équipés d'un tel élément ainsi que les panneaux solaires comportant de tels capteurs.

Il est connu par exemple du document FR-A 2 349 806 de réaliser des capteurs solaires du type tubulaire. Ils sont essentiellement constitués par une première et une seconde enveloppe de verre transparent, délimitant entre elles une enceinte qui est mise sous vide. L'intérieur de l'enveloppe intérieure est destiné à recevoir un échangeur thermique. La face de cette enveloppe intérieure située dans l'enceinte sous vide est recouverte d'une feuille métallique dont la partie exposée au rayonnement solaire est revêtue d'un matériau de préférence sélectivement sensible à ce rayonnement. De la qualité de ce matériau dépend le rendement du dispositif. La présente demande a précisément pour objet, un élément absorbant qui remplit toutes les conditions nécessaires à son application aux capteurs solaires. Elle concerne un tel élément présentant un fort pouvoir d'absorption dans la gamme des longueurs d'onde correspondant à la lumière solaire et un faible pouvoir d'émission dans la gamme des longueurs d'onde correspondant à l'infrarouge, et ceci quelque soit la forme ou la nature de l'échangeur thermique qui lui est associé.

L'invention concerne plus précisément un élément absorbant sélectivement l'énergie solaire, destiné à être introduit entre deux enveloppes, l'une extérieure et l'autre intérieure, délimitant entre elles une enceinte mise sous vide, l'enveloppe intérieure servant de paroi à un logement lui-même destiné à recevoir un échangeur thermique, cet élément étant caractérisé en ce qu'il comprend deux feuilles d'un matériau bon conducteur de la chaleur comportant chacune un pliage selon un angle α, tel qu'après assemblage de ces deux feuilles, cet élément présente une section en losange entourant l'enveloppe intérieure et s'appliquant contre celle-ci en contact intime et permanent avec elle sur quatre zones de contact, de façon à assurer un bon rendement de transfert thermique entre ledit élément absorbant et l'échangeur.

L'invention sera mieux comprise à l'aide des explications qui vont suivre et des figures jointes parmi lesquelles :
— les figures 1 et 2 représentent deux exemples de réalisation d'un élément absorbant selon l'invention ;
— la figure 3 représente, vu de dessus, un panneau solaire.

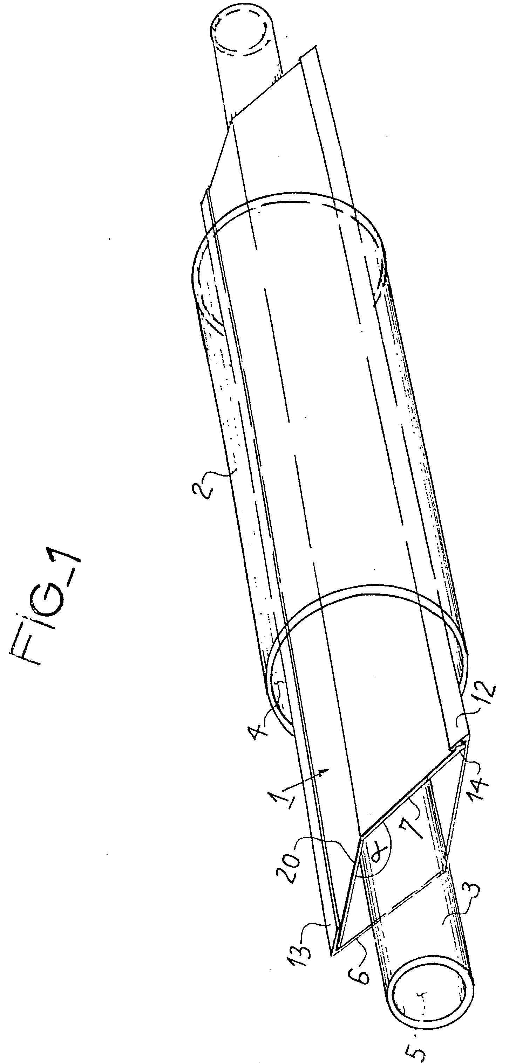

Comme le montre la figure 1, l'élément absorbant 1 conforme à l'invention est placé entre deux enveloppes 2 et 3 délimitant une enceinte 4 dans laquelle on fait le vide. L'enveloppe intérieure 3 constitue la paroi d'un logement 5 destiné à recevoir un échangeur thermique (non représenté sur la figure). Cet élément absorbant est constitué par un ensemble de deux feuilles 6 et 7 en matériau relativement rigide et élastique, présentant un effet de ressort, bon conducteur de la chaleur, de préférence métallique, par exemple de l'acier. Le coefficient d'élasticité de ce matériau est choisi tel qu'il ne se trouve pas notablement modifié par les traitements thermiques auxquels il est susceptible d'être soumis. Au moins une de ces feuilles est, dans une première variante de réalisation, réalisée en un matériau qui, outre les caractéristiques d'élasticité énoncées ci-dessous est traité pour être sensible sélectivement au rayonnement solaire, ou dans une seconde variante sert de support à une couche d'une matière (cuivre pur par exemple) présentant cette qualité. Une de ces feuilles, celle non exposée au rayonnement solaire, peut être avantageusement constituée par un matériau qui, lorsqu'il est poli, présente un facteur de réflexion élevé vis-à-vis du rayonnement infrarouge, de sorte que la face externe de cette feuille, ayant un coefficient d'émission faible dans l'infrarouge, ne rayonne que très faiblement lorsqu'elle est portée à haute température. Ce traitement et/ou cette couche référencée 20 dans l'exemple décrit au moyen de la figure 1 est réalisée au moins sur toute la partie de l'élément exposée au rayonnement solaire. De plus ces deux feuilles sont liées l'une à l'autre, de part et d'autre sur toute une longueur. A cette fin, la première feuille 6 comporte deux parties rabattues 12 et 13 qui viennent pincer la seconde feuille 7. Une soudure par point 14 ou tout autre procédé de liaison rend les deux feuilles solidaires l'une de l'autre. Enfin, chacune de ces feuilles est pliée selon un angle α, de telle sorte que l'élément constitué par l'assemblage de ces deux feuilles présente une section en losange entourant l'enveloppe intérieure et est mis en contact intime avec elle sur quatre zones de contact avec une pression constante fonction de l'angle α et du coefficient d'élasticité du matériau choisi. Cette disposition et le choix du matériau permet d'obtenir une pression de contact permanente tant qu'un seuil, lui-même fonction des caractéristiques mécaniques du matériau utilisé, n'est pas dépassé suite à un échauffement et/ou un pliage anormal. La couche de cuivre est déposée soit par un procédé électrolytique, soit par placage, soit par tout autre procédé. Son épaisseur est comprise entre 2 et 100 microns mais de préférence comprise entre 2 et 20 microns. Pour plus de clarté on a représenté seulement partiellement les composants décrits ci-dessus.

En étudiant les relevés météorologiques relatifs à certains sites, on constate qu'une grande partie du rayonnement solaire est composée de flux diffus, dû à la nébulosité de l'atmosphère de ces sites. Le flux solaire n'étant pas directif, par suite de sa diffusion à travers les couches nuageuses peut être capté par la face avant et arrière des capteurs tubulaires disposés dans un panneau ne comportant pas de plaque de fond.

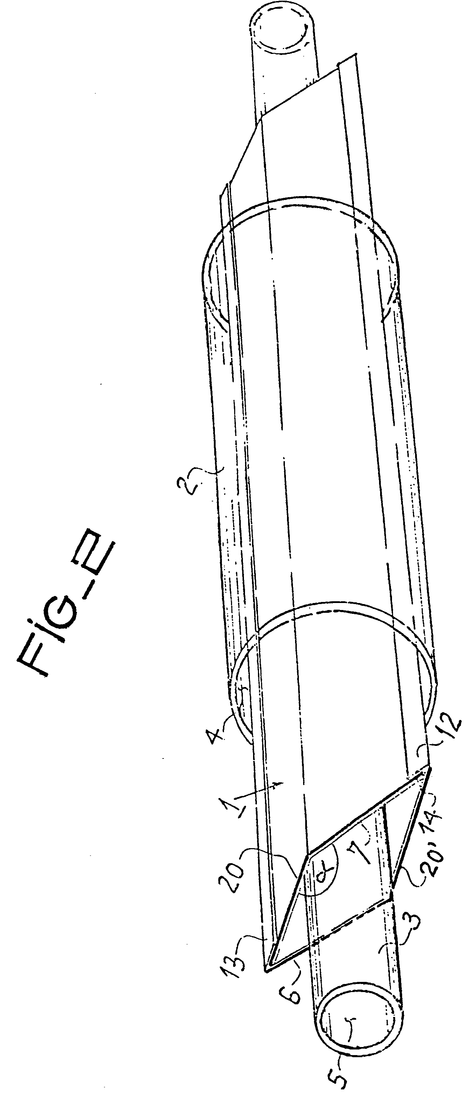

Pour augmenter la surface absorbante dans les conditions définies ci-dessus on réalise une variante représentée sur la figure 2 où les mêmes éléments portent les mêmes références que dans la figure 1. Conformément à l'invention une couche 20' par exemple de même nature que la couche 20 est réalisée sur la face extérieure de la feuille (6) de l'élément absorbant.

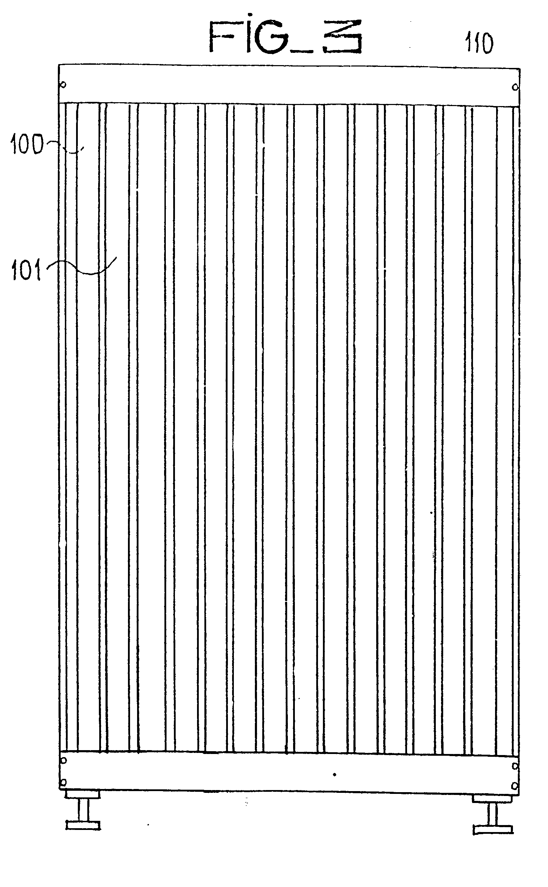

L'agencement de capteurs équipés d'éléments absorbant sélectivement l'énergie solaire tels que décrits précédemment, permet de s'affranchir de l'utilisation de réflecteurs disposés à l'extérieur des capteurs. De plus, les parties utiles de ces capteurs sont à l'abri des agressions de l'environnement extérieur. Ces deux caractéristiques rendent possible la combinaison de tels capteurs en panneau à claire-voie comme représenté sur la figure 3.

Un certain nombre de capteurs 100, 101...n dont on n'a seulement représenté les enveloppes externes, sont accolés les uns aux autres et maintenus en place dans une structure 110. Un tel agencement présente notamment l'avantage de la légèreté et de l'accessibilité.

La mise en œuvre d'un élément absorbant conforme à l'invention dans la fabrication des capteurs, solaires eux-mêmes regroupés pour former des panneaux solaires, assure un rendement de transfert thermique maximum au droit de l'échangeur quelle que soit la forme ou la nature de cet échangeur.

### Revendications

1. Elément absorbant (1) sélectivement l'énergie solaire, destiné à être introduit entre deux enveloppes (2, 3), l'une (2) extérieure et l'autre (3) intérieure, délimitant entre elles une enceinte (4) mise sous vide, l'enveloppe intérieure servant de paroi à un logement lui-même destiné à recevoir un échangeur thermique, cet élément étant caractérisé en ce qu'il comprend deux feuilles (6, 7) d'un matériau bon conducteur de la chaleur comportant chacune un pliage selon un angle $\alpha$, tel qu'après assemblage de ces deux feuilles, cet élément présente une section en losange, entourant l'enveloppe intérieure, s'appliquant contre celle-ci, en contact intime et permanent avec elle sur quatre zones de contact.

2. Elément absorbant selon la revendication 1, caractérisé en ce que les feuilles sont réalisées en un matériau rigide assurant ce contact intime et permanent à une pression constante, indépendante de la température, jusqu'à un seuil déterminé, fonction du coefficient d'élasticité du matériau choisi et de l'angle $\alpha$ de pliage, pour des dimensions des feuilles données.

3. Elément absorbant selon l'une des revendications 1 et 2, caractérisé en ce que les feuilles sont réalisées en acier.

4. Elément absorbant selon la revendication 3, caractérisé en ce qu'une des feuilles sert de support à une couche mince (20) d'une matière rendue sensible sélectivement au rayonnement solaire.

5. Elément absorbant selon la revendication 3, caractérisé en ce que les feuilles servent de support à une couche mince (20, 20') d'une matière rendue sensible sélectivement au rayonnement solaire.

6. Elément absorbant selon l'une des revendications 4 et 5, caractérisé en ce que cette matière est du cuivre plaqué sur le support d'acier.

7. Elément absorbant selon la revendication 3, caractérisé en ce qu'une des feuilles est polie sur sa face extérieure.

8. Capteur solaire, caractérisé en ce qu'il est équipé d'un élément absorbant selon l'une des revendications précédentes.

9. Panneau solaire mettant en œuvre plusieurs capteurs selon la revendication 8, caractérisé en ce que l'agencement de ces capteurs est réalisé à claire-voie.

### Claims

1. Absorbing element (1) for selectively absorbing solar energy and adapted to be inserted between two envelopes (2, 3) comprising an outer envelope (2) and an inner envelope (3) which delimit between them a vacuum space (4), wherein the inner envelope constitutes the wall of a housing adapted to contain a heat exchanger, characterized in that said element comprises two sheets (6, 7) made of a heat-conducting material, each one of said sheets being folded under an angle $\alpha$, in such a manner that after assembly of said two sheets said element has a rhombus-shaped section and surrounds the inner envelope while engaging the same tightly and permanently in four zones of contact.

2. Absorbing element according to claim 1, characterized in that said sheets are made of a rigid material, ensuring said tight and permanent contact under a constant pressure independant of the temperature, up to a predetermined threshold value which is a function of the elasticity coefficient of the selected material and the folding angle $\alpha$, for given dimensions of said sheets.

3. Absorbing element according to any one of claims 1 and 2, characterized in that said sheets are made of steel.

4. Absorbing element according to claim 3, characterized in that one of said sheets constitutes a carrier for a thin layer (20) of material rendered selectively sensitive to solar radiation.

5. Absorbing element according to claim 3, characterized in that said sheets constitute a support for a thin layer (20, 20') of material rendered selectively sensitive to solar radiation.

6. Absorbing element according to any one of claims 4 and 5, characterized in that said material is copper plated onto the steel carrier.

7. Absorbing element according to claim 3, characterized in that one of said sheets is polished on its outer surface.

8. Solar energy capting device, characterized in that it comprises an absorbing element according to any one of the preceding claims.

9. Solar energy capting panel comprising a plurality of capting devices according to claim 8, characterized in that said capting devices are arranged in a lattice-like manner.

## Ansprüche

1. Energieabsorptionselement (1), welches selektiv Solarenergie absorbiert und zwischen eine äussere Hülle (2) und eine innere Hülle (3) einführbar ist, wobei diese Hüllen (2, 3) einen Vakuumraum (4) einschliessen und die innere Hülle die Wandung eines Gehäuses bildet, welches einen Wärmeaustauscher aufnimmt, dadurch gekennzeichnet, das es zwei aus gut wärmeleitendem Material gefertigte Streifen (6, 7) aufweist, deren jeder um einen Winkel α gefaltet ist, derart, dass nach dem Zusammensetzen dieser Streifen das Element einen rhombusförmigen Querschnitt aufweist, die innere Hülle umgibt und sich an dieselbe eng und dauernd in vier Berührungszonen anlegt.

2. Absorptionselement nach Anspruch 1, dadurch gekennzeichnet, dass die Streifen aus steifen Material gefertigt sind, das den engen und dauernden Kontakt unter konstantem Druck unabhängig von der Temperatur bis zu einem vom Elastizitätskoeffizienten des gewälten Materials und vom Faltwinkel α bei gegebenen Abmessungen der Streifen abhängigen Grenzwert gewährleistet.

3. Absorptionselement nach Anspruch 1 oder 2, dadurch gekennzeichnet, dass die Streifen aus Stahl gefertigt sind.

4. Absorptionselement nach Anspruch 3, dadurch gekennzeichnet, dass einer der Streifen den Träger einer dünnen, selektiv solarstrahlungsempfindlichen Schicht (20) bildet.

5. Absorptionselement nach Anspruch 3, dadurch gekennzeichnet, dass die Streifen als Träger einer dünnen, selektiv solarstrahlungsempfindlichen Schicht (20, 20') ausgebildet sind.

6. Absorptionselement nach einem der Ansprüche 4 und 5, dadurch gekennzeichnet, dass das genannte Material aus auf den aus Stahl gefertigten Träger aufgesechichtetem Kupfer besteht.

7. Absorptionselement nach Anspruch 3, dadurch gekennzeichnet, dass einer der Streifen eine polierte Aussenfläche aufweist.

8. Sonnenenergiefänger, dadurch gekennzeichnet, dass er ein Absorptionselement nach einem der vorstehenden Ansprüche aufweist.

9. Sonnerenergiefängerplatte mit mehreren Sonnenenergiefängern nach Anspruch 8, dadurch gekennzeichnet, dass die Sonnenenergiefänger gitterartig angeordnet sind.

# FIG_1

FIG_2

0013 214

FIG_3                    110

100

101